# EUROPÄISCHE PATENTSCHRIFT

(11) **EP 3 857 093 B1**
(45) Veröffentlichungstag und Bekanntmachung des Hinweises auf die Patenterteilung: **23.08.2023**
(21) Anmeldenummer: 19779804.4
(22) Anmeldetag: 25.09.2019
(51) Int. Cl.: F16D 65/22, F16D 65/52, B60T 1/06

(54) **SPREIZEINRICHTUNG MIT EINER NACHSTELLVORRICHTUNG FÜR EINE TROMMELBREMSE**
EXPANSION DEVICE HAVING A READJUSTMENT UNIT FOR A DRUM BRAKE
DISPOSITIF D'ÉCARTEMENT POURVU D'UN DISPOSITIF DE RÉGLAGE POUR UN FREIN À TAMBOUR

(30) Priorität: 26.09.2018 DE 102018216488
(43) Veröffentlichungstag der Anmeldung: 04.08.2021
(73) Patentinhaber: Continental Automotive Technologies GmbH, 30165 Hannover (DE)
(72) Erfinder: BACH, Uwe, 60488 Frankfurt am Main (DE); GÄDKE, Martin, 60488 Frankfurt am Main (DE); VON HAYN, Holger, 60488 Frankfurt am Main (DE); SEFO, Ahmed, 60488 Frankfurt am Main (DE); HOFFMANN, Jens, 60488 Frankfurt am Main (DE); MESSNER, Adrian, 60488 Frankfurt am Main (DE); RITTER, Wolfgang, 60488 Frankfurt am Main (DE); PETZOLD, Falk, 60488 Frankfurt am Main (DE); SCHULITZ, Matthias, 60488 Frankfurt am Main (DE)
(74) Vertreter: Continental Corporation
(86) Internationale Anmeldenummer: PCT/EP2019/075780
(87) Internationale Veröffentlichungsnummer: WO 2020/064786

(56) Entgegenhaltungen:
- WO-A1-99/28649
- DE-A1- 19 858 319
- DE-A1- 19 858 642
- DE-A1-102014 226 268
- DE-A1-102014 226 273
- GB-A- 2 168 770
- KR-U- 20110 009 669
- US-A- 6 119 822
- US-A1- 2010 122 879

## Beschreibung

Die Erfindung betrifft eine Spreizeinrichtung für Trommelbremse nach dem Oberbegriff des Anspruchs 1 sowie eine zugehörige Trommelbremse.

Es ist bekannt, bei Fahrzeugen, insbesondere Elektrofahrzeugen als Betriebsbremse ausgelegten Trommelbremsen zu verwenden. Diese verfügen oft über eine rotatorisch angetriebene Spreizeinheit. Als Antrieb für die Spreizeinheit dient dabei meist ein Elektromotor mit einem nachgeschalteten Untersetzungsgetriebe.

Bei derartigen Spreizeinheiten ist es ferner bekannt, zur Wandlung der rotatorischen Bewegung des Antriebs in eine translatorische Spreizbewegung des Abtriebs einfache und robuste Kugelrampenanordnungen zu verwenden. Bei einer Kugelrampenanordnung werden meist drei oder mehr Kugeln zwischen zwei Scheiben in darin eingearbeiteten, in Umfangsrichtung gegenläufig ausgerichteten Rampen eingespannt, so dass bei Verdrehung einer der Scheiben die Kugeln in den Rampen abrollen und die Scheiben dadurch auseinander drücken.

Ein charakteristisches Merkmal bei Kugelrampenanordnungen ist dabei ein vergleichsweise geringer Hub, welcher durch die bauraumbedingt stark begrenzten Durchmesser der Kugeln und Scheiben sowie Tiefe der Rampen eingeschränkt ist. Mit dem alleinigen Hub der Kugelrampenanordnungen kann ein betriebsbedingter Verschleiß der Bremsbeläge einer Trommelbremse meist nicht ausreichend ausgeglichen werden. Es ist daher bekannt, Spreizeinheiten mit Kugelrampenanordnungen mit integrierten Nachstellvorrichtung zu versehen, um den Verschleißweg zu kompensieren.

Zum technischen Hintergrund wird hierbei beispielsweise auf DE 10 2014 226 270 A1 verwiesen. Darin ist eine Spreizeinrichtung mit zwei Kugelrampenanordnungen beschrieben, bei der die Nachstellung des Verschleißweges durch Verdrehung einer gesonderten, koaxial zu der Spreizachse angeordneten, gewindebehafteten Nachstellschraube in eine Nachstellrichtung erfolgt, wobei die Nachstellschraube mittels einer Rasteinrichtung an Verdrehung in Gegenrichtung gehindert ist. Weitere derartige Einrichtungen sind aus den DE 10 2014 226 268 A1 und aus der DE 10 2014 226 273 A1 ebenfalls bekannt.

Als nachteilig bei bekannten Spreizeinrichtungen mit integrierten Nachstellvorrichtungen allgemein und mit steifen Kugelrampenanordnungen im Besonderen ist, dass die Nachstellung bei einer hohen Spreizkraft erfolgt, was ein vergleichsweise hohes internes Kraftniveau während des Nachstellvorgangs zu Folge hat. Das kann beispielsweise beim Lösevorgang erhöhten Reibkräften zwischen den verdrehbaren Komponenten verursachen und weitere Aspekte negativ beeinflussen wie beispielsweise Wirkungsgrad beim Zurückdrehen, Stetigkeit des Regelverlaufs, Verschleiß der Reibpartner und anderer Bauteile usw.

Es stellt sich somit eine Aufgabe, eine verbesserte Spreizeinrichtung mit einer integrierten Nachstellvorrichtung für eine Trommelbremse anzubieten, welche insbesondere eine zuverlässige Nachstellfunktion bei einem reduzierten Kraftniveau ermöglicht.

Die Aufgabe wird erfindungsgemäß durch eine Spreizeinrichtung mit Merkmalskombinationen nach Anspruch 1 gelöst. Unteransprüche geben weitere erfindungsgemäße Ausführungen und Weiterbildungen an.

In der bevorzugten Ausführungsform kann die Spreizeinrichtung rotatorisch angetrieben sein und wenigstens eine Kugelrampenanordnung zum Wandeln einer rotatorischen Antriebsbewegung in eine translatorische Spreizbewegung aufweisen.

Dadurch kann sie in Spreizrichtung besonders steif und robusten ausgelegt werden und bei beliebigen Kraftfahrzeugtypen, insbesondere Elektrofahrzeugen eingesetzt werden.

Die Erfindung sieht ferner vor, dass die Nachstellvorrichtung ein Sperrglied aufweist, welches axial gegen die Nachstellschraube elastisch vorgespannt angeordnet ist und die Rasteinrichtung zwischen dem Sperrglied und der Nachstellschraube angeordnet ist.

Dadurch kann besonders effektiv, platzsparend und robust ein koaxialer Antrieb für eine selbsttätige Nachstellung, aber auch Ersteinstellung bei Aufbau einer neuen Bremse realisiert werden, welcher zudem von der Spreizkraft entkoppelt ist.

Für eine weiter verbesserte, besonders robuste und unkomplizierte Steuerung der Nachstellung kann die Rasteinrichtung eine an der Nachstellschraube stirnseitig ausgebildete erste Rastverzahnung und eine am Sperrglied stirnseitig ausgebildete zweite Rastverzahnung umfassen, welche im Zusammenwirken mit der ersten Rastverzahnung eine gegenseitige Verdrehung in eine Umfangsrichtung unter Bildung einer axial wirkenden Kraft erlaubt in Gegenrichtung sperrt.

Besonderes einfach und zuverlässig kann die erfindungsgemäße Leerlaufdrehung realisiert werden, wenn das Sperrglied relativ zum Spreizkolben im Umfangsrichtung zwischen den Anschlägen verdrehbar gelagert ist.

Dabei können die Anschläge einfach und robust als Schenkel eines kreissektorförmigen Bereichs einer Ausnehmung ausgebildet sein, an die ein radialer Vorsprung eines anderen Bauteils anschlägt. Dabei kann die Leerlaufdrehung eindeutig und zuverlässig durch Auslegung des Sektorwinkels zusammen mit der Breite des Vorsprungs konstruktiv festgelegt werden.

Eine besonders effiziente Herstellbarkeit der Komponenten kann erreicht werden, wenn die Ausnehmung im Spreizkolben ausgebildet ist und das Sperrglied wenigstens einen Schaft mit wenigstens einem daran angeordneten radialen Vorsprung aufweist, welcher in die Ausnehmung eintaucht. So kann beispielsweise der Spreizkolben durch einfaches Stanzen aus einem Blechwerkstoff erzeugt werden.

Für ein vereinfachtes Zusammenwirken mit einem elektromechanischen Betätigungsantrieb bei einem weiter hin kompakten Aufbau kann die die Spreizeinrichtung über eine Antriebshülse betätigt werden, welche zu diesem Zweck zumindest bereichsweise mit einer Außenverzahnung versehen und im Gehäuse der Spreizeinrichtung drehbar gelagert ist.

Die bevorzugte Ausführungsform der Erfindung sieht vor, dass in der Antriebshülse ein Nachstellkolben mit der darin eingeschraubten Nachstellschraube und ein Stützkolben angeordnet sind, wobei der Nachstellkolben und der Stützkolben gegenüber Antriebshülse verdrehgesichert sowie axial verschiebbar gelagert sind und wobei der Stützkolben axial in Richtung Nachstellkolben an der Nachstellschraube abstützbar ist.

Insbesondere bevorzugt kann sie weitergebildet sein, indem eine erste Kugelrampenanordnung zwischen dem Nachstellkolben und dem ersten Spreizkolben und eine zweite Kugelrampenanordnung zwischen dem Spreizkolben und dem zweiten Spreizkolben ausgebildet sind.

Damit wird ein besonders kompakter und steifer Aufbau der Spreizeinrichtung mit einem für einen stetigen Regelverlauf und hohen Wirkungsgrad günstigen symmetrischen Kraftverlauf sowie reduzierter Anzahl von translatorisch reibbehaftet bewegten Komponenten erreicht.

Des Weiteren beansprucht die Erfindung eine Trommelbremse, umfassend wenigstens eine erfindungsgemäße Spreizeinheit. Dabei kann die erfindungsgemäße Spreizeinheit bei verschiedenen Typen von Trommelbremsen gleichermaßen erfolgreich verwendet werden, beispielsweise bei Duo-Servo oder Simplex Trommelbremsen.

Weitere Merkmale, Vorteile und Anwendungsmöglichkeiten der Erfindung gehen aus der nachfolgenden Beschreibung hervor. Hierbei zeigen:
Fig.1 eine Draufsicht auf eine Trommelbremse mit einer erfindungsgemäßen Spreizeinheit bei einer abgenommenen Bremstrommel.
Fig.2 eine erste Ausführungsform der erfindungsgemäßen Spreizeinheit in Axialschnitt
Fig.3 eine zweite Ausführungsform der erfindungsgemäßen Spreizeinheit räumlich in einer Teilschnittdarstellung mit skizziertem Kraftflussverlauf.
Fig.4 die Ausführungsform gemäß Fig.3 in einer unbetätigten Ausgangsstellung.
Fig.5 die Ausführungsform gemäß Fig.3 in einer betätigten Stellung unmittelbar nach Überfahren der Leerlaufdrehung.
Fig.6 die Ausführungsform gemäß Fig.3 in einer gegenüber Fig.5 weiter betätigten Stellung, vor Einleitung eines Nachstellvorgangs.
Fig.7 die Ausführungsform gemäß Fig.3 in einer gegenüber Fig.6 weiter betätigten Stellung, im Umschaltpunkt, bei Einleitung eines Nachstellvorgangs.
Fig.8 die Ausführungsform gemäß Fig. 3 in einer Lösestellung nach dem Zurückfahren der Leerlaufdrehung, vor Beginn der Nachstellung.
Fig.9 die Ausführungsform gemäß Fig.3 in einer gegenüber Fig.8 weiter fortgeschrittenen Lösestellung, während der Nachstellung.
Fig.10 ein Kraft-Weg-Diagramm der Spreizeinrichtung bei Bremsbetätigung und Nachstellung.

Weil die grundsätzliche Funktionsweise von Trommelbremsen und Kugelrampenanordnungen hinreichend bekannt sind, wird nachfolgend lediglich auf die erfindungswesentlichen Funktionseigenschaften eingegangen.

### Fig.1

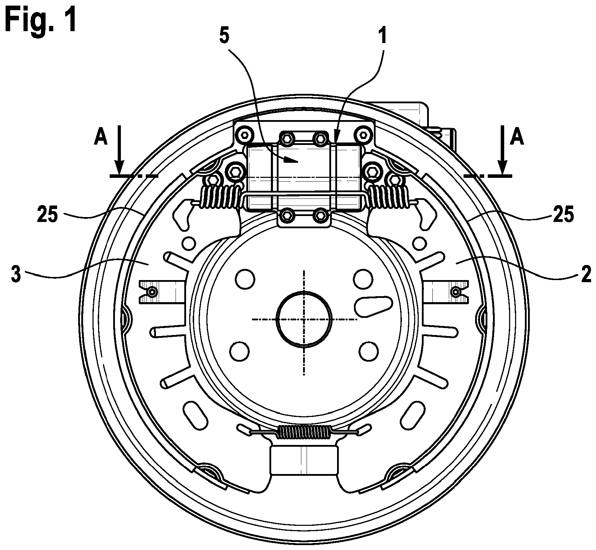

Fig.1 zeigt beispielhaft eine Trommelbremse 4 bei abgenommener Bremstrommel. Eine Spreizeinrichtung 1 spreizt zwei Bremsbacken 2,3 mit einem daran aufgebrachten Bremsbelag 25 auseinander gegen die nicht gezeigte Bremstrommel. Durch den Verschleiß der Bremsbelege 25 vergrößert sich der für eine Bremsung erforderliche Spreizweg kontinuierlich bis hin zur einer definierten Verschleißgrenze. Der vergrößerte verschleißweg wird stufenweise durch eine nachfolgend beschriebene, in dem Gehäuse 5 angeordnete Nachstellvorrichtung 8 kompensiert.

Um eine unsymmetrische, ungleichmäßige Anlage der Beläge 25 an der Bremstrommel zu vermeiden, kann das Gehäuse 5 der Spreizeinrichtung 1 dabei schwimmend entlang der Spreizachse A gelagert sein.

### Fig. 2

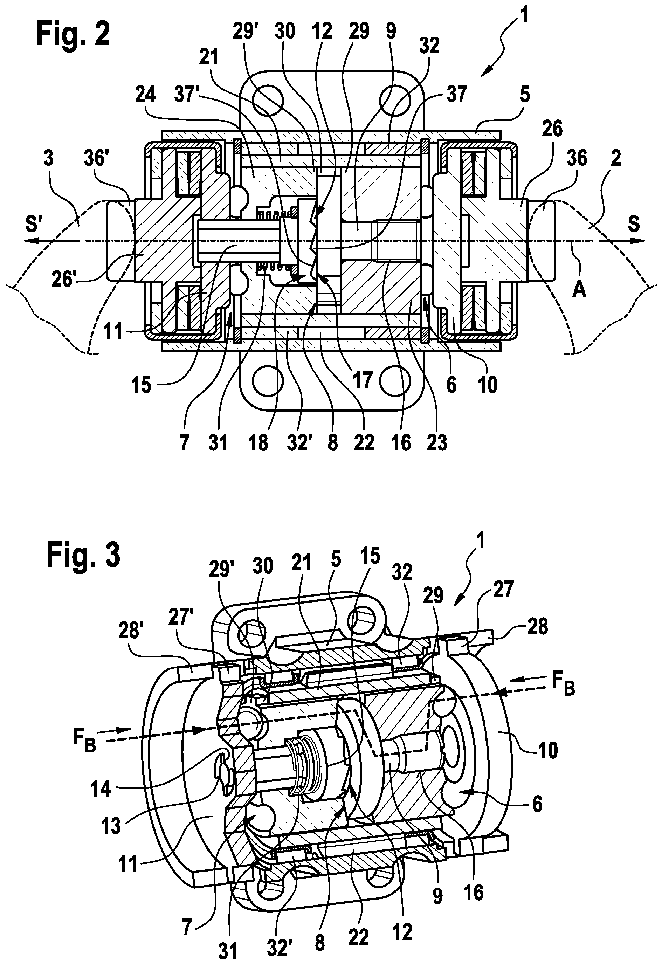

Fig. 2 zeigt die Spreizeinrichtung 1 in einem nicht nachgestellten Ausgangszustand im Axialschnitt durch die Spreizachse A. Die Spreizeinrichtung 1 ist einer nicht dargestellten elektromotorischen Antriebseinheit durch eine rotatorische Antriebsbewegung betätigt. Hierbei wird in eine in dem Gehäuse 5 mittels Radiallagern 31,32 um die Spreizachse A drehbar gelagerte Antriebshülse 21 über eine radiale Außenverzahnung 22 ein Drehmoment eingeleitet, beispielsweise durch ein nicht dargestelltes Zahnrad oder Antriebsriemen.

Innerhalb der Antriebshülse 21 ist ein Nachstellkolben 23 und ein Stützkolben 24 verdrehgesichert sowie axial verschiebbar gelagert. Hierfür sind am Nachstellkolben 23 beziehungsweise Stützkolben 24 radiale Rippen 29,29` vorgesehen, welche in einer Längsnut 30 in der Antriebshülse 21 gleitend geführt sind.

Eine Nachstellschraube 9 ist über ein Gewinde 16 formschlüssig mit dem Nachstellkolben 23 verbunden, so dass bei einer Verdrehung der Nachstellschraube 9 um die Spreizachse A der Nachstellkolben 23 sich axial versetzt. Dabei stützt sich der Stützkolben 24 axial in Richtung Nachstellkolben 23 an der Nachstellschraube 9 ab.

Des Weiteren weist die Spreizeinrichtung 1 in ihrem Gehäuse 5 zwei Spreizkolben 10 und 11, welche bei dieser Ausführungsform über zwischengeschaltete Tellerfedern auf Bremsbackenaufnahmen 26,26` einwirken. Die Stützkolben 10,11 sind gegenüber Gehäuse 5 axial verschiebbar und in Umfangsrichtung verdrehgesichert gelagert.

Die Ausführungsart der Verdrehsicherung kann innerhalb der Erfindung applikationsspezifisch unterschiedlich ausgeführt sein. In der gezeigten Ausführungsform ist diese beispielhaft durch Bremsbackenaufnahmen 26,26` realisiert, die sich in Umfangsrichtung mit ihren Aufnahmeschlitzen 36,36' an den flachen Bremsbacken 2,3 abstützen.

Zwischen dem Nachstellkolben 23 und dem Spreizkolben 10 beziehungsweise zwischen dem Stützkolben 24 und dem Spreizkolben 11 ist jeweils eine Kugelrampenanordnung 7 ausgebildet. Bei einer Betätigung der Antriebshülse 21 durch die Antriebseinheit werden die Spreizkolben 24 und Nachstellkolben 23 mitgedreht und bewirken durch die Kugelrampenanordnungen 6,7 eine translatorische Spreizung der beiden Spreizkolben 10,11.

Die Nachstellvorrichtung 8 umfasst ein Sperrglied 15, welches im Wesentlichen innerhalb des Stützkolbens 24 koaxial zu der Spreizachse A angeordnet ist. Durch ein Federelement 31, welches sich am Stützkolben 24 abgestützt, wird das Sperrglied 15 stets elastisch gegen die Nachstellschraube 9 axial vorgespannt.

Zwischen dem Sperrglied 15 und der Nachstellschraube 9 ist dabei eine Rasteinrichtung 12 in Form von zwei komplementär ineinandergreifenden, axialen Rastverzahnungen 17,18 angeordnet. Die erste Rastverzahnung 17 ist stirnseitig an der Nachstellschraube 9 und die zweite Rastverzahnung 18 stirnseitig am Sperrglied 15 ausgebildet. Die beiden Rastverzahnungen 17,18 sind jeweils als eine Art Ratschenverzahnung mit mehreren am Kreisumfang verteilten Zähnen 37,37' gestaltet, bei denen jeweils eine Zahnflanke als eine flachere Rampe und die andere Zahnflanke als eine steilere Rampenstirnfläche ausgeführt sind. Durch die Rastverzahnung 17 ist eine gegenseitige Verdrehung zwischen dem Sperrglied 15 und der Nachstellschraube 9 in nur eine Umfangsrichtung möglich.

### Fig.3

In der Fig.3 ist eine andere, bevorzugte Ausführungsform der Spreizeinrichtung 1 teilgeschnitten dargestellt. Im Unterschied zu der Ausführung nach Fig.2, ist hier die Verdrehsicherung der beiden Spreizkolben 10,11 durch radial abstehende Führungsnasen 27 realisiert, welche in eine axiale Führungsnut 28 im Gehäuse 5 eintauchen. Ferner ist das Federelement 31 als eine Schraubfeder statt wie in der Fig.2 eines Tellerfederpakets vorgesehen.

Des Weiteren ist hier ein Kraftfluss durch die Spreizeinrichtung 1 vereinfacht dargestellt, welcher sich durch die aus den Bremsbacken 2,3 auf die Spreizeinrichtung 1 einwirkenden Spreizkräften Fs resultiert. Weil der Stützkolben 24 zusammen mit der Nachstellschraube 9 und dem Nachstellkolben 23 schwimmend in der Antriebshülse 21 gelagert sind, befinden sie sich beim Spreizen der Bremsbacken 2,3 axial in einem Kräftegleichgewicht.

### Fig.4

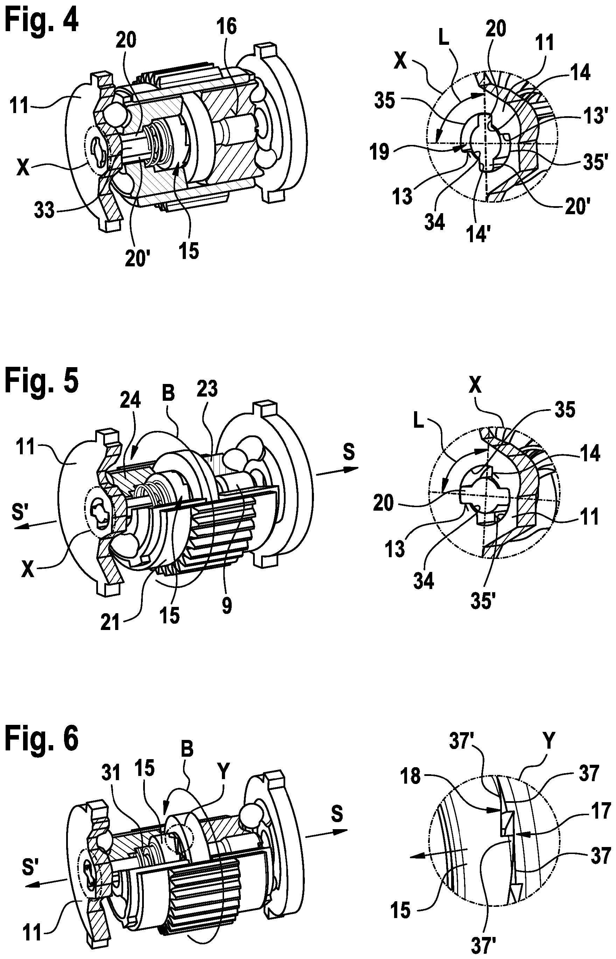

Fig.4 zeigt die Spreizeinrichtung 1 gemäß Fig.3.

Das Sperrglied 15 ist relativ zum Spreizkolben 11 im Umfangsrichtung zwischen zwei Anschlägen 13,14 verdrehbar gelagert. Der Verdrehwinkel zwischen den beiden Anschlägen 13,14 definiert konstruktiv die Leerlaufdrehung L.

Zu diesem Zweck ist am Sperrglied 15 ein Schaft 33 und an dem Schaft zwei rippenförmige radiale Vorsprunge 20,20` wie eine Art Keilwelle mit 2 Keilen ausgebildet.

In dem Spreizkolben 11 ist eine Ausnehmung 19 angeordnet, welche hier als axialer Durchbruch ausgeführt ist. Eine sackförmige Ausnehmung wäre jedoch innerhalb der Erfindung ebenso zulässig. Die Ausnehmung weist im Querschnitt eine Art zentrale Bohrung mit zwei radial von der Bohrung abgehenden, im wesentlichen kreissektorförmigen Ausschnitten 35,35` auf. Die Schenkel der kreissektorförmigen Ausschnitte 35,35' bilden die Anschläge 13,14 beziehungsweise 13',14'. Das Sperrglied 15 taucht mit dem Schaft 33 in die Ausnehmung 19 derart ein, dass der Vorsprung 20 sich in dem Ausschnitt 35 befindet. Der Sperrglieds 15 ist so gegenüber dem Spreizkolben 11 innerhalb der Leerlaufdrehung L begrenzt verdrehbar, wobei die Begrenzung dadurch zustande kommt, indem der Vorsprung 20 mit seinen Seitenflanken entweder an dem Anschlag 13 oder dem Anschlag 14 anschlägt.

Die Leerlaufdrehung L zusammen mit Zähnezahl in der Rastverzahnung 17 und Gewindesteigung vom Gewinde 16 sind maßgebliche Größen für die Charakteristik der Nachstellvorrichtung 8.

Gemäß einer weiteren, hier nicht gezeigten erfindungsgemäßen Ausführungsform kann für bestimmte Applikationen die Zuordnung von Schaft 33 und Ausnehmung 19 in dem Sinne vertauscht werden, dass der Schaft 33 mit dem oder den Vorsprüngen 20, ... an dem Spreizkolben 11 und die Ausnehmung 19 in dem Sperrglied 15 vorgesehen sind. Hierdurch wird zwar die Herstellung des Spreizkolbens 11 aufwändiger, dafür kann sich beispielsweise seine Kippsicherheit im Zusammenbau erhöht werden.

In der gezeigten Ausführungsform ist der Schaft 33 für im Querschnitt achssymmetrisch mit zwei gegenüberliegenden identischen Vorsprüngen 20,20` gestaltet. Innerhalb der Erfindung sind jedoch verschiedene weitere Varianten mit nur einem oder mehr als 2 Vorsprüngen oder asymmetrische Ausführungen zusammen mit entsprechend adaptierten Ausnehmungen 19 jederzeit zulässig.

In der hier gezeigten unbetätigten Ausgangsstellung liegt der Vorsprung 20 am Anschlag 14 an.

### Fig.5

Bei einer Bremsung wird die Antriebshülse 21 in Betätigungsrichtung B betätigt und dreht sich zusammen mit dem Nachstellkolben 23, der Nachstellschraube 3, dem Stützkolben 24 und dem Sperrglied 15, bis die Leerlaufdrehung L überfahren ist und der Vorsprung 20 am Anschlag 13 anschlägt.

### Fig.6

Bei weiterer Betätigung bleibt das Sperrglied 15 bedingt durch den Anschlag 13 stehen, der Nachstellkolben 23 zusammen mit der Nachstellschraube 3 und dem Stützkolben 24 drehen sich jedoch weiter. Dabei verschieben sich die Rastverzahnungen 17,18 von der Nachstellschraube 9 beziehungsweise Sperrglied 15 gegeneinander, das Sperrglied 15 weicht axial gegen die Federkraft des Federelements 31 in Richtung Spreizkolben 11 aus.

Ist der Verschleiß der Bremsbeläge 25 unterhalb eines definierten Schwellenwerts ist der Spreizweg bei dieser Stellung begrenzt und die Spreizeinrichtung 1 kehr aus diesem Zustand nach Beendigung des Bremsvorgangs voll reversibel zurück.

### Fig.7

Ist einem Verschleiß der Bremsbeläge 25 oberhalb des Schwellenwerts vergrößert sich der Spreizweg soweit, dass die Antriebshülse 21 sich in Vergleich zur Position nach Fig.6 weiter dreht. Dadurch überspringen die Zähne 37,37` einander und die Rastverzahnungen 17,18 verrasten aufgrund der Federkraft des Federelement 31 in einer veränderten, umfangsversetzten Position. Hiermit wird ein Nachstellvorgang eingeleitet.

### Fig.8

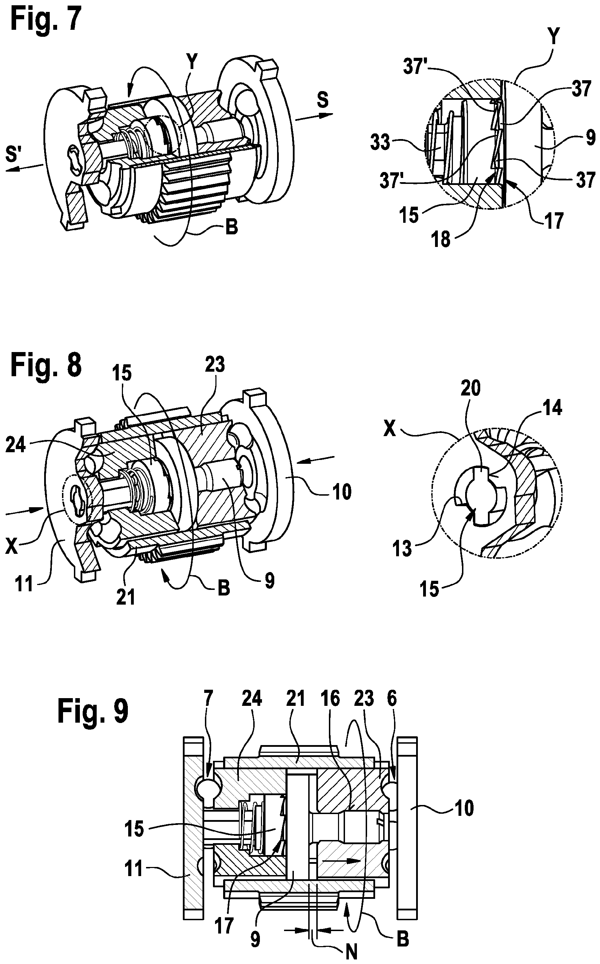

Nach Lösen der Bremse, ausgehend von einer Position nach Fig.7, dreht sich die Antriebshülse 21 zusammen mit dem Nachstellkolben 23, der Nachstellschraube 3, dem Stützkolben 24 und dem Sperrglied 15 zurück bis die Leerlaufdrehung L in erneut, diesmal in Gegenrichtung überfahren ist und der Vorsprung 20 am Anschlag 14 anschlägt. Bei dieser Verdrehung werden die Spreizkolben 10,11 ebenfalls axial entgegen der Spreizrichtung S zurückversetzt, wodurch das Kraftniveau in den Kugelrampenanordnungen 6,7 entsprechend sinkt.

### Fig.9

Bei der weiteren Bewegung in Löserichtung beginnt nach der Stellung gemäß Fig.8 die Nachstellung des Nachstellkolbens 23.

Weitere Drehung der Nachstellschraube 9 wird durch die Rasteinrichtung 17 beim dem durch den Anschlag 14 angehaltenen Sperrglied 15 verhindert. Weil sich die Antriebshülse 21 jedoch zusammen mit dem Nachstellkolben 23 bis zur Ausgangsstellung weiterdreht, wird dieser am Gewinde 16 relativ zur Nachstellschraube 9 verdreht und axial um den Nachstellweg N verschoben. Damit vergrößert sich der Axialabstand zwischen den Spreizkolben 10 und 11 in der unbetätigten Ausgangsstellung. Der Verschleiß der Bremsbeläge 25 wird damit ausgeglichen.

Es wirken dabei im Wesentlichen nur noch relativ geringe Reibkräfte im Gewinde 16 und an der Kontaktfläche zwischen dem Stützkolben 23 und der Nachstellschraube 9, die hohen Spannkräfte in den Kugelrampenanordnungen 6,7 infolge der Leerlaufdrehung L abgebaut wurden.

### Fig. 10

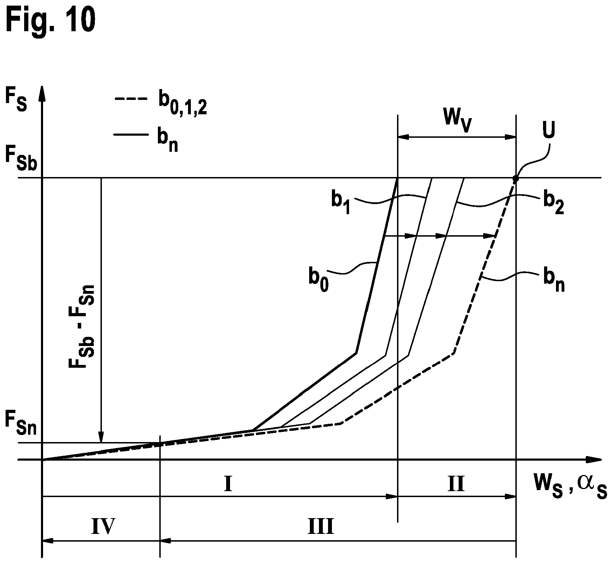

In der Fig.10 ist ein vereinfachtes Kraft-Weg-Diagramm der erfindungsgemäßen Spreizeinrichtung 1 bei Bremsbetätigung und Nachstellung dargestellt.

Die durchgezogene Linie symbolisiert Betätigung bei Neuzustand b0 beziehungsweise Verschleißstände b1,2, unterhalb des für die Nachstellung festgelegten Schwellenwerts Wv. Die gestrichelte Linie bn symbolisiert Betätigung mit erfolgter Nachstellung.

Die senkrechte Achse zeigt das Niveau der Spreizkraft Fs, welche über die Spreizkolben 10,11 auf das System einwirkt. Die Waagerechte Achse zeigt den Spreizweg Ws beziehungsweise den damit korrelierenden Verdrehwinkel αs.

In der Phase I, zur Beginn einer Betätigung, wird zunächst die Leerlaufdrehung L verfahren (Stellungen gemäß Fig.4,5). Dabei werden die Bremsbacken 2,3 an die Bremstrommel angelegt und gegen diese verspannt, die Spannkraft Fs steigt auf ihren Betriebswert Fsb.

In der Phase II beginnen die Rastverzahnungen 17,18 sich gegeneinander zu drehen, ohne jedoch, dass die Zahne 37,37` überspringen (Stellung gemäß Fig.6), Je nach dem Verschleißstand b1,b2 wird der verfahrene Spreizweg Ws kontinuierlich größer. Innerhalb dieser Phase kehrt die Spreizeinrichtung 1 bei Lösen der Bremse und Abbau der Spreizkraft Fs ohne Nachstellung vollreversibel in den Ausgangszustand zurück.

Im Umschaltpunkt U überspringen die Zahne 37,37', die Rasteinrichtung 12 verrastet in einer neuen Position und ein Nachstellvorgang wird eingeleitet (Stellung gemäß Fig.7).

In der Phase III wird nach Lösen der Bremse zunächst die Leerlaufdrehung L zurück bis zum Anschlag 14 verfahren, dabei sinkt die Spreizkraft Fs erheblich auf ihren Restwert bei Nachstellung Fsn (Stellung gemäß Fig.8).

In der Phase IV erfolgt bei reduzierter Spannkraft Fs die Verdrehung des Nachstellkolbens 23 gegenüber Nachstellschraube 9, der Nachstellweg N wird erzeugt (Stellung gemäß Fig.9) .

### Bezugszeichenliste

- 1: Spreizeinrichtung
- 2: Bremsbacke
- 3: Bremsbacke
- 4: Trommelbremse
- 5: Gehäuse
- 6: Kugelrampenanordnung
- 7: Kugelrampenanordnung
- 8: Nachstellvorrichtung
- 9: Nachstellschraube
- 10: Spreizkolben
- 11: Spreizkolben
- 12: Rasteinrichtung
- 13: Anschlag
- 14: Anschlag
- 15: Sperrglied
- 16: Gewinde
- 17: Rastverzahnung
- 18: Rastverzahnung
- 19: Ausnehmung
- 20: Vorsprung
- 21: Antriebshülse
- 22: Außenverzahnung
- 23: Nachstellkolben
- 24: Stützkolben
- 25: Bremsbelag
- 26: Bremsbackenaufnahme
- 27: Führungsnase
- 28: Führungsnut
- 29: Rippe
- 30: Längsnut
- 31: Federelement
- 32: Radiallager
- 33: Schaft
- 34: Bohrung
- 35: Ausschnitt
- 36: Aufnahmeschlitz
- 37: Zahn
- A: Spreizachse
- B: Betätigungsrichtung
- L: Leerlaufdrehung
- N: Nachstellweg
- S: Spreizrichtung

## Patentansprüche

1. Spreizeinrichtung (1) zum Spreizen von Bremsbacken (2,3) einer Trommelbremse (4) für ein Fahrzeug entlang einer Spreizachse (A), umfassend ein Gehäuse (5) mit einer darin angeordneten Nachstellvorrichtung (8) zum Ausgleich von einem durch Bremsbelagverschleiß vergrößerten Spreizweg, wobei die Nachstellvorrichtung (8) eine koaxial zu der Spreizachse (A) angeordnete Nachstellschraube (9) mit einem Gewinde (16) umfasst, welche durch Verdrehung in eine erste Umfangsrichtung eine Axialverschiebung von wenigstens einem Spreizkolben (10,11) in Spreizrichtung (S,S`) bewirkt und deren Verdrehung in eine entgegengesetzte Umfangsrichtung durch eine federbelastete Rasteinrichtung (12) sperrbar ist, **dadurch gekennzeichnet, dass** die Spreizeinrichtung (1) von einer elektromotorischen Antriebseinheit betätigt ist, und die Rasteinrichtung (12) eine definierte Leerlaufdrehung (L) der Nachstellschraube (9) ermöglicht, welche durch einen in eine erste Umlaufrichtung wirkenden ersten Anschlag (13) und einen in die entgegengesetzte Umlaufrichtung wirkenden zweiten Anschlag (14) konstruktiv festgelegt ist.

2. Spreizeinrichtung (1) nach Anspruch 1, **dadurch gekennzeichnet, dass** die Spreizeinrichtung (1) rotatorisch angetrieben ist und wenigstens eine Kugelrampenanordnung (6, 7) zum Wandeln einer rotatorischen Antriebsbewegung in eine translatorische Spreizbewegung entlang der Spreizachse (A) aufweist.

3. Spreizeinrichtung (1) nach wenigstens einem der vorstehenden Ansprüche, **dadurch gekennzeichnet, dass** die Nachstellvorrichtung (8) ein Sperrglied (15) aufweist, welches axial gegen die Nachstellschraube (9) elastisch vorgespannt angeordnet ist und die Rasteinrichtung (12) zwischen dem Sperrglied (15) und der Nachstellschraube (9) angeordnet ist.

4. Spreizeinrichtung (1) nach Anspruch 3, **dadurch gekennzeichnet, dass** die Rasteinrichtung (12) eine an der Nachstellschraube (9) stirnseitig ausgebildete erste Rastverzahnung (17) und eine am Sperrglied (15) stirnseitig ausgebildete zweite Rastverzahnung (18) umfasst, welche mit der ersten Rastverzahnung (17) derart zusammenwirkt, das eine gegenseitige Verdrehung in eine Umfangsrichtung unter Bildung einer axial wirkenden Kraft möglich ist und eine gegenseitige Verdrehung in Gegenrichtung gesperrt ist.

5. Spreizeinrichtung (1) nach wenigstens einem der Ansprüche 3 oder 4, **dadurch gekennzeichnet, dass** das Sperrglied (15) relativ zum Spreizkolben (11) im Umfangsrichtung zwischen den Anschlägen (13,14) verdrehbar gelagert ist.

6. Spreizeinrichtung (1) nach Anspruch 5, **dadurch gekennzeichnet, dass** die Anschläge (13,14) als Schenkel eines kreissektorförmigen Bereichs einer Ausnehmung (19) in einem Bauteil ausgebildet sind, welche mit einem an einem anderen Bauteil ausgebildeten radialen Vorsprung (20) zusammenwirken.

7. Spreizeinrichtung (1) nach Anspruch 6, **dadurch gekennzeichnet, dass** die Ausnehmung (19) im Spreizkolben (11) ausgebildet ist und das Sperrglied (15) wenigstens einen Schaft (33) mit wenigstens einem daran angeordneten radialen Vorsprung (20) aufweist, welcher in die Ausnehmung (19) eintaucht.

8. Spreizeinrichtung (1) nach wenigstens einem der vorstehenden Ansprüche **dadurch gekennzeichnet, dass** die Spreizeinrichtung (1) über eine Antriebshülse (21) betätigt wird, welche zu diesem Zweck zumindest bereichsweise mit einer Außenverzahnung (22) versehen und in dem Gehäuse (5) drehbar gelagert ist.

9. Spreizeinrichtung (1) nach Anspruch 8, **dadurch gekennzeichnet, dass** in der Antriebshülse (21) ein Nachstellkolben (23) mit der darin eingeschraubten Nachstellschraube (9) und ein Stützkolben (24) angeordnet sind, wobei der Nachstellkolben (23) und der Stützkolben (24) gegenüber Antriebshülse (21) verdrehgesichert, sowie axial verschiebbar gelagert sind, wobei der Stützkolben (24) axial in Richtung Nachstellkolben (23) an der Nachstellschraube (9) abstützbar ist.

10. Spreizeinrichtung (1) nach Anspruch 9 und wenigstens einem der Ansprüche 2 bis 8, **dadurch gekennzeichnet, dass** eine erste Kugelrampenanordnung (6) zwischen dem Nachstellkolben (23) und dem ersten Spreizkolben (10) und eine zweite Kugelrampenanordnung (7) zwischen dem Spreizkolben (24) und dem zweiten Spreizkolben (11) ausgebildet sind.

11. Trommelbremse (4) umfassend wenigstens eine Spreizeinrichtung (1) nach wenigstens einem der vorstehenden Ansprüche.

## Claims

1. Expansion device (1) for expanding brake shoes (2, 3) of a drum brake (4) for a vehicle along an expansion axis (A), comprising a housing (5) having a readjustment unit (8) arranged therein for compensating an expansion travel increased due to brake lining wear, wherein the readjustment unit (8) comprises a readjusting screw (9), which is arranged coaxially with the expansion axis (A) and has a thread (16) which brings about an axial movement of at least one expansion piston (10, 11) in the expansion direction (S, S') by rotation in a first circumferential direction and the rotation of which in an opposite circumferential direction can be blocked by means of a spring-loaded latching unit (12), **characterized in that** the expansion device (1) is actuated by an electric-motor drive unit, and the latching unit (12) allows a defined idle rotation (L) of the readjusting screw (9), which is defined structurally by a first stop (13) acting in a first direction of revolution and a second stop (14) acting in the opposite direction of revolution.

2. Expansion device (1) according to Claim 1, **characterized in that** the expansion device (1) is driven in rotation and has at least one ball ramp assembly (6, 7) for converting a rotary driving motion into a translational expanding motion along the expansion axis (A).

3. Expansion device (1) according to at least one of the preceding claims, **characterized in that** the readjustment unit (8) has a blocking member (15), which is arranged in a manner elastically preloaded axially against the readjusting screw (9), and the latching unit (12) is arranged between the blocking member (15) and the readjusting screw (9).

4. Expansion device (1) according to Claim 3, **characterized in that** the latching unit (12) comprises a first latching tooth system (17), which is formed on the end of the readjusting screw (9), and a second latching tooth system (18), which is formed on the end of the blocking member (15) and interacts with the first latching tooth system (17) in such a way that relative rotation in one circumferential direction, forming an axially acting force, is possible and relative rotation in the opposite direction is blocked.

5. Expansion device (1) according to at least one of Claims 3 and 4, **characterized in that** the blocking member (15) is mounted so as to be rotatable in the circumferential direction between the stops (13, 14) relative to the expansion piston (11).

6. Expansion device (1) according to Claim 5, **characterized in that** the stops (13, 14) are formed as sides of a circular-sector-shaped region of an aperture (19) in a component, which interact with a radial projection (20) on another component.

7. Expansion device (1) according to Claim 6, **characterized in that** the aperture (19) is formed in the expansion piston (11), and the blocking member (15) has at least one shank (33) having at least one radial projection (20) arranged thereon, which enters the aperture (19).

8. Expansion device (1) according to at least one of the preceding claims, **characterized in that** the expansion device (1) is actuated by means of a driving sleeve (21), which, for this purpose, is provided, at least in some region or regions, with an external tooth system (22) and is rotatably mounted in the housing (5).

9. Expansion device (1) according to Claim 8, **characterized in that** a readjusting piston (23) having the readjusting screw (9) screwed therein, and a supporting piston (24) are arranged in the driving sleeve (21), wherein the readjusting piston (23) and the supporting piston (24) are mounted in such a way as to be secured against rotation relative to the driving sleeve (21) and to be axially movable, wherein the supporting piston (24) can be supported axially in the direction of the readjusting piston (23) on the readjusting screw (9).

10. Expansion device (1) according to Claim 9 and at least one of Claims 2 to 8, **characterized in that** a first ball ramp assembly (6) is formed between the readjusting piston (23) and the first expansion piston (10), and a second ball ramp assembly (7) is formed between the expansion piston (24) and the second expansion piston (11).

11. Drum brake (4) comprising at least one expansion device (1) according to at least one of the preceding claims.

## Revendications

1. Dispositif d'écartement (1) servant à l'écartement de mâchoires de frein (2, 3) d'un frein à tambour (4) pour un véhicule le long d'un axe d'écartement (A), comprenant un boîtier (5) dans lequel est disposé un dispositif de rattrapage de jeu (8) servant à la compensation d'une course d'écartement augmentée par l'usure des garnitures de frein, le dispositif de rattrapage de jeu (8) comprenant une vis de rattrapage de jeu (9) disposée de manière coaxiale à l'axe d'écartement (A) et dotée d'un filetage (16), lequel, par rotation dans un premier sens circonférentiel, provoque un déplacement axial d'au moins un piston d'écartement (10, 11) dans la direction d'écartement (S, S') et dont la rotation dans un sens circonférentiel opposé peut être bloquée par un dispositif d'encliquetage (12) sollicité par ressort, **caractérisé en ce que** le dispositif d'écartement (1) est actionné par une unité d'entraînement électromotorisée, et le dispositif d'encliquetage (12) permet une rotation à vide définie (L) de la vis de rattrapage de jeu (9), laquelle est définie structuralement par une première butée (13) agissant dans un premier sens circonférentiel et une deuxième butée (14) agissant dans le sens circonférentiel opposé.

2. Dispositif d'écartement (1) selon la revendication 1, **caractérisé en ce que** le dispositif d'écartement (1) est entraîné en rotation et présente au moins un ensemble de rampes à billes (6, 7) servant à la conversion d'un mouvement d'entraînement en rotation en un mouvement d'écartement en translation le long de l'axe d'écartement (A).

3. Dispositif d'écartement (1) selon au moins l'une des revendications précédentes, **caractérisé en ce que** le dispositif de rattrapage de jeu (8) présente un organe de blocage (15), lequel est disposé de manière précontrainte élastiquement axialement contre la vis de rattrapage de jeu (9) et le dispositif d'encliquetage (12) est disposé entre l'organe de blocage (15) et la vis de rattrapage de jeu (9).

4. Dispositif d'écartement (1) selon la revendication 3, **caractérisé en ce que** le dispositif d'encliquetage (12) comprend une première denture d'encliquetage (17) formée sur le côté frontal de la vis de rattrapage de jeu (9) et une deuxième denture d'encliquetage (18) formée sur le côté frontal de l'organe de blocage (15), laquelle coopère avec la première denture d'encliquetage (17) de telle sorte qu'une rotation relative dans un sens circonférentiel est possible en formant une force agissant axialement et qu'une rotation relative dans le sens opposé est bloquée.

5. Dispositif d'écartement (1) selon au moins l'une des revendications 3 ou 4, **caractérisé en ce que** l'organe de blocage (15) est monté rotatif dans le sens circonférentiel entre les butées (13, 14) par rapport au piston d'écartement (11).

6. Dispositif d'écartement (1) selon la revendication 5, **caractérisé en ce que** les butées (13, 14) sont formées comme branches d'une région en forme de secteur circulaire d'un évidement (19) dans un composant, lesquelles coopèrent avec une saillie radiale (20) formée sur un autre composant.

7. Dispositif d'écartement (1) selon la revendication 6, **caractérisé en ce que** l'évidement (19) est formé dans le piston d'écartement (11) et l'organe de blocage (15) présente au moins une tige (33) dotée d'au moins une saillie radiale (20) disposée sur celle-ci, laquelle saillie pénètre dans l'évidement (19).

8. Dispositif d'écartement (1) selon au moins l'une des revendications précédentes, **caractérisé en ce que** le dispositif d'écartement (1) est actionné par le biais d'une douille d'entraînement (21), laquelle, à cet effet, est pourvue d'une denture extérieure (22) au moins dans certaines régions et est montée rotative dans le boîtier (5).

9. Dispositif d'écartement (1) selon la revendication 8, **caractérisé en ce qu'**un piston de rattrapage de jeu (23) dans lequel la vis de rattrapage de jeu (9) est vissée et un piston de support (24) sont disposés dans la douille d'entraînement (21), le piston de rattrapage de jeu (23) et le piston de support (24) étant bloqués en rotation par rapport à la douille d'entraînement (21), et étant montés axialement mobiles, le piston de support (24) pouvant être supporté axialement dans la direction du piston de rattrapage de jeu (23) sur la vis de rattrapage de jeu (9).

10. Dispositif d'écartement (1) selon la revendication 9 et au moins l'une des revendications 2 à 8, **caractérisé en ce qu'**un premier ensemble de rampes à billes (6) est formé entre le piston de rattrapage de jeu (23) et le premier piston d'écartement (10) et un deuxième ensemble de rampes à billes (7) est formé entre le piston d'écartement (24) et le deuxième piston d'écartement (11).

11. Frein à tambour (4) comprenant au moins un dispositif d'écartement (1) selon au moins l'une des revendications précédentes.
